# EUROPÄISCHE PATENTSCHRIFT

(11) **EP 2 358 196 B1**
(45) Veröffentlichungstag und Bekanntmachung des Hinweises auf die Patenterteilung: **17.05.2017**
(21) Anmeldenummer: 09756254.0
(22) Anmeldetag: 09.11.2009
(51) Int. Cl.: A01N 1/02, F25D 3/10, F25D 3/11, F25D 29/00, G01N 1/42, G01N 35/00

(54) **KRYOSPEICHEREINRICHTUNG**
CRYOGENIC STORAGE DEVICE
DISPOSITIF DE STOCKAGE CRYOGÉNIQUE

(30) Priorität: 19.11.2008 DE 102008057981
(43) Veröffentlichungstag der Anmeldung: 24.08.2011
(73) Patentinhaber: Fraunhofer-Gesellschaft zur Förderung der angewandten Forschung e.V., 80686 München (DE)
(72) Erfinder: ZIMMERMANN, Heiko, 66386 St. Ingbert (DE); SCHÖN, Uwe, 66540 Neunkirchen (DE); FUHR, Günter, 13187 Berlin (DE); LEUTHOLD, Dirk, 07554 Brahmenau (DE); BELKE, Marianne, 07747 Jena (DE)
(74) Vertreter: Hertz, Oliver
(86) Internationale Anmeldenummer: PCT/EP2009/008000
(87) Internationale Veröffentlichungsnummer: WO 2010/057589

(56) Entgegenhaltungen:
- WO-A2-2005/010499
- DE-A1-102004 047 965
- US-A- 5 029 447
- US-A- 5 233 844
- US-A1- 2008 213 080

## Beschreibung

Die Erfindung betrifft eine Kryospeichereinrichtung, insbesondere zur Kryospeicherung biologischer Proben sowie ein Verfahren zum Betrieb einer Kryospeichereinrichtung gemäß den Oberbegriffen der Ansprüche 1 bzw. 6.

In der Biologie, Biotechnologie, Pharmakologie und der Medizin ist es bekannt, Proben aus biologischem Material in gefrorenem Zustand zu lagern. Zur Aufrechterhaltung der Vitalität der Proben über einen längeren Zeitraum sind dazu sehr tiefe Temperaturen nötig, beispielsweise die Temperatur von flüssigem Stickstoff oder von dessen Dampf. Eine Umkristallisierung in den Proben, welche eine Zerstörung des Probenmaterials zur Folge haben könnte, kann bei derartig tiefen Temperaturen über Monate und Jahre vermieden werden. Üblicherweise werden solche Kryoproben in meist vakuumisolierten Kryobehältern, sogenannten Kryotanks, gelagert. Solche Kryotanks können beispielsweise durch flüssigen Stickstoff gekühlt werden, der sich in einem flüssigen Bad am Boden des Kryotanks befindet. Die Proben werden häufig in Regalen, sogenannten Racks, gelagert, welche in der Gasphase oberhalb des flüssigen Stickstoffs angeordnet sind. Ein derartiger Kryotank ist beispielsweise in der DE 103 32 799 A1 offenbart. Zur Aufrechterhaltung der Kühlung über einen langen Zeitraum ist regelmäßig ein Nachtanken mit flüssigem Stickstoff notwendig.

Es ist bei der Lagerung der biologischen Proben von Bedeutung, dass die Proben einerseits nicht mit der Kühlflüssigkeit in Berührung kommen und andererseits auch nicht unzulässig erwärmt werden. Derartige Fehler können zu einem unwiederbringlichen Verlust des Probenmaterials führen. Insbesondere die Aufrechterhaltung einer ausreichenden Kühlung ist für die Qualität der Kryospeicherung sehr wichtig. Bei einem Nachtanken des Kryobehälters mit flüssigem Stickstoff kann es aber unter Umständen zu einer Überfüllung mit flüssigem Stickstoff kommen. In diesem Fall können die Proben in den oberhalb des Flüssigkeitsreservoirs angeordneten Racks in Berührung mit dem flüssigen Stickstoff geraten und somit zerstört werden. Um ein Überfüllen des Stickstoffreservoirs am Boden des Kryobehälters zu vermeiden werden daher Füllstandssensoren und automatische Ventilregelungen eingesetzt. Insbesondere bei den genannten tiefen Temperaturen kann es jedoch zu Ausfällen eines Füllstandsensors oder der die Stickstoffzufuhr regelnden Flüssigkeitsventile kommen, was zu einer Überfüllung führen kann.

Eine andere Gefahr für die Proben besteht in einer Erwärmung der Proben, die zu einer Umkristallisierung oder im schlimmsten Fall zu einem Schmelzen der Proben führen kann. Dies kann beispielsweise aus einer defekten Isolierung des Kryobehälters folgen. Da es bei solchen Störfällen zu einem Verlust der Proben kommen kann, besteht ein Bedarf, die in dem Kryotank gelagerten Proben im Störfall zu sichern.

In US 5 233 844 A wird eine Speichereinheit für die Kryospeicherung von Proben beschrieben, die eine Speicherkammer und eine Zusatzkammer umfasst. Die Speicherkammer wird mit flüssigem Stickstoff gekühlt. Der Füllzustand des flüssigen Stickstoffs wird mit einem Sensor überwacht und unter Verwendung eines Regelkreises eingestellt. Proben können mit einem Greifer von der Speicherkammer in die Zusatzkammer überführt werden, um die Proben von der Zusatzkammer in die Umgebung der Speichereinheit zu entnehmen. Weitere Speichergeräte sind aus US 5 029 447 A, WO 2005/010499 A2, US2008/213080 A1 und DE 10 2004 047 965 A1 bekannt.

Es ist daher eine Aufgabe der Erfindung, eine verbesserte Kryospeichereinrichtung und ein verbessertes Verfahren zum Betrieb einer Kryospeichereinrichtung anzugeben, mit dem die oben genannten Probleme vermieden werden können. Insbesondere ist es eine Aufgabe der Erfindung, eine Vorrichtung und ein Verfahren anzugeben, mit denen verhindert werden kann, dass die darin bzw. damit gelagerten Proben nicht durch einen der oben genannten Störfälle zerstört oder beschädigt werden.

Die Aufgabe wird durch eine Vorrichtung gemäß Anspruch 1 und ein Verfahren gemäß Anspruch 6 gelöst. Vorteilhafte Weiterbildungen und Varianten sind in den abhängigen Ansprüchen angegeben.

Die Erfindung umfasst die allgemeine technische Lehre, in einem Kryotank gelagerte Proben, welche durch einen auftretenden Störfall gefährdet sind, bei Aufrechterhaltung der Kühlkette in einen Zwischenlagerbehälter auszulagern. Insbesondere kann nach der erfindungsgemäßen Lehre ein bestimmter Betriebszustand einer Kryospeichereinrichtung erkannt werden und die Proben entsprechend ausgelagert werden.

Eine erfindungsgemäße Kryospeichereinrichtung, welche zur Kryospeicherung biologischer Proben geeignet ist, umfasst eine Probenträgereinrichtung, die zur Aufnahme der biologischen Proben eingerichtet ist. Die Probenträgereinrichtung kann beispielsweise in Form von Regalen, sogenannten Racks ausgestaltet sein. Sie kann einteilig sein oder aus mehreren Trägerteilen bestehen. Die Kryospeichereinrichtung umfasst ferner einen Kryobehälter, der zur Aufnahme der Probenträgereinrichtung eingerichtet ist, sowie eine Behälterkühleinrichtung, mit welcher der Kryobehälter kühlbar ist. Ein solcher Kryobehälter wird beispielsweise durch einen vakuumisolierten Kryotank gebildet, an dessen Boden sich ein Reservoir an flüssigem Kühlmittel z.B. Stickstoff befindet, das die Behälterkühleinrichtung bildet. Über eine optional vorgesehene externe Zufuhrvorrichtung für flüssiges Kühlmittel kann flüssiger Stickstoff nachgetankt werden. Die Zufuhr des flüssigen Stickstoffs kann beispielsweise periodisch oder bedarfsgesteuert stattfinden oder durch einen Benutzer erfolgen. Zur Feststellung eines Bedarfs kann ein Füllstandsensor oder ein Temperatursensor im Kryobehälter vorgesehen sein. Der Kryotank ist beispielsweise zylinderförmig mit einer runden Grundfläche und einer Öffnung auf seiner runden Oberseite zum Be- und Entladen mit den Probenträgern. Zweckmäßigerweise weist der Kryobehälter eine temperaturisolierte Verschlussvorrichtung auf, mit welcher die Öffnung des Kryobehälters, im Lagerzustand lösbar verschlossen ist. Die Probenträgereinrichtung ist vorzugsweise an die Form des Kryotanks angepasst. Beispielsweise besteht sie aus mehreren Trägerteilen in Form von zylindersektorförmigen Racks. Im normalen Betriebszustand, d.h. beispielsweise während der Lagerung von Proben, befinden sich die Probenträgerteile vorzugsweise in einem Innenraum des Kryobehälters. Die Probenträgereinrichtung wird dann vorzugsweise durch die Gesamtheit aller im Innenraum des Kryobehälters aufnehmbaren Trägerteile gebildet.

Eine erfindungsgemäße Kryospeichereinrichtung umfasst einen Zwischenlagerbehälter, der zur Zwischenlagerung der Probenträgereinrichtung eingerichtet ist, sowie eine Transporteinrichtung, mit der die Probenträgereinrichtung zwischen dem Kryobehälter und dem Zwischenlagerbehälter beweglich ist. Der Zwischenlagerbehälter ist vorzugsweise geeignet, die gesamte, aus allen im Innenraum des Kryobehälters aufnehmbaren Trägerteilen bestehende Probenträgereinrichtung zur Zwischenlagerung aufzunehmen. Vorzugsweise weist der Innenraum des Zwischenlagerbehälters dafür ein Volumen auf, das größer oder gleich dem Volumen des Innenraums des Kryobehälters ist. Der Zwischenlagerbehälter ist zweckmäßig wärmeisoliert und weist einen Innenraum auf, in welchen die Probenträgereinrichtung zur Zwischenlagerung aufgenommen werden kann. Damit der Innenraum einsehbar ist, kann der Zwischenlagerbehälter eine mindestens teilweise transparente Behälterwandung aufweisen. Der Zwischenlagerbehälter kann an die Form des Kryobehälters angepasst sein und z.B. eine zylindrische Form haben. Der Zwischenlagerbehälter ist vorzugsweise eingerichtet, entweder einen Teil der im Kryobehälter gelagerten Probenträgereinrichtung oder die gesamte Probenträgereinrichtung, d.h. alle im Kryobehälter gelagerten Probenträgerteile, aufzunehmen. Im Fall eines defekten Probenträgerteils ist es dann beispielsweise ausreichend, wenn nur der defekte Probenträgerteil zum Austausch in den Zwischenlagerbehälter bewegt wird. Andererseits ist es dann möglich, beispielsweise bei Gefahr einer Überfüllung mit Stickstoff im Kryobehälter, alle Probenträgerteile in den Zwischenlagerbehälter auszulagern und somit zu sichern.

Beispielsweise bildet der Zwischenlagerbehälter einen Lagerturm mit einer verschließbaren Öffnung an seiner Unterseite, die auf der Öffnung an der Oberseite des Kryobehälters positioniert ist. Zwischenlagerbehälter und Kryobehälter sind vorzugsweise so angeordnet, dass ihre Innenräume bei geöffneten Verschlussvorrichtungen miteinander verbunden sind. Somit kann ein direkter Transport der Probenträgereinrichtung von dem Innenraum des Kryobehälters in den Innenraum des Zwischenlagerbehälters und umgekehrt stattfinden. Da die Probenträgereinrichtung generell aus mehreren, getrennt voneinander beweglichen Trägerteilen bestehen kann, können mit der Transporteinrichtung auch einzelne Trägerteile zwischen dem Zwischenlagerbehälter und dem Kryobehälter bewegt werden.

Erfindungsgemäß weist die Kryospeichereinrichtung zusätzlich eine Sensoreinrichtung auf, mit der mindestens ein Betriebsparameter der Kryospeichereinrichtung erfassbar ist. In Abhängigkeit von einem Ausgangssignal der Sensoreinrichtung kann die Transporteinrichtung bei Erfassung eines vorbestimmten Betriebszustands der Kryospeichereinrichtung aktiviert werden, so dass die Probenträgereinrichtung vom Kryobehälter in den Zwischenlagerbehälter bewegt wird. Ein vorbestimmter Betriebszustand der Kryospeichereinrichtung ist beispielsweise ein Störzustand der Kryospeichereinrichtung oder einfach ein Betankungszustand während einer Nachfüllung von flüssigem Stickstoff. Als Störzustand oder Störfall wird in dieser Anmeldung ein unerwünschter Betriebszustand der Kryospeichereinrichtung bezeichnet, durch welchen die Proben gefährdet werden könnten. Dies kann auch einen Betriebszustand betreffen, der durch einen von der Kryospeichereinrichtung unabhängigen Störfall beispielsweise ein Feuer hervorgerufen wird.

Gemäß der Erfindung weist die Kryospeichereinrichtung zusätzlich zu der Behälterkühleinrichtung auch eine Zwischenlagerkühleinrichtung auf, mit welcher der Zwischenlagerbehälter kühlbar ist. Diese Zwischenlagerkühleinrichtung ist ebenso wie die Transporteinrichtung in Abhängigkeit von einem Ausgangssignal der Sensoreinrichtung bei Erfassung eines vorbestimmten Betriebszustands der Kryospeichereinrichtung aktivierbar, um den Zwischenlagerbehälter zu kühlen. Die Zwischenlagerkühleinrichtung ist vorzugsweise unabhängig von der Behälterkühleinrichtung des Kryobehälters aktivierbar. Die Zwischenlagerkühleinrichtung wird vorzugsweise auch bei einer regulären Entnahme oder Zugabe von Proben in oder aus der Kryospeichereinrichtung betätigt.

Das erfindungsgemäße Verfahren zum Betrieb einer Kryospeichereinrichtung, umfassend einen Kryobehälter, der mit einer Behälterkühleinrichtung gekühlt wird, einen Zwischenlagerbehälter, der zur Zwischenlagerung einer Probenträgereinrichtung eingerichtet ist, und eine Transporteinrichtung, mit der die Probenträgereinrichtung zwischen dem Kryobehälter und dem Zwischenlagerbehälter beweglich ist, umfasst die Schritte: Kryospeicherung von in einer Probenträgereinrichtung angeordneten biologischen Proben in einem Kryobehälter, und Erfassung von mindestens einem Betriebsparameter der Kryospeichereinrichtung mit einer Sensoreinrichtung. Erfindungsgemäß wird bei Erfassung eines vorbestimmten Betriebszustandes der Kryospeichereinrichtung die Transporteinrichtung in Abhängigkeit von einem Ausgangssignal der Sensoreinrichtung aktiviert und die Probenträgereinrichtung vom Kryobehälter in den Zwischenlagerbehälter bewegt. Zusätzlich wird eine Zwischenlagerkühleinrichtung zur Kühlung des Zwischenlagerbehälters in Abhängigkeit von einem Ausgangssignal der Sensoreinrichtung aktiviert und der Zwischenlagerbehälter abgekühlt. Vorzugsweise wird zusätzlich eine Alarmanzeige zur Ausgabe eines akustischen oder optischen Alarmsignals aktiviert.

Vorteilhafterweise wird bei Erkennen eines Störzustandes zunächst die Zwischenlagerkühleinrichtung aktiviert und anschließend die Transporteinrichtung, um die Probenträgereinrichtung in den bereits gekühlten Zwischenlagerbehälter zu transportieren. Damit kann eine Aufrechterhaltung der Kühlkette bei der Probenspeicherung gesichert werden.

Die Zwischenlagerkühleinrichtung ist zweckmäßig geeignet, den Zwischenlagerbehälter auf unterschiedliche Temperaturen zu kühlen. Vorzugsweise lässt sich die Abkühlung auch mit unterschiedlichen Geschwindigkeiten und unterschiedlichem Kühlmittelbedarf regeln. So kann es beispielsweise bei einem Störfall notwendig sein, die Proben sehr schnell aus dem Kryobehälter in den Zwischenlagerbehälter zu transportieren. Dann ist es unter Umständen notwendig, den Zwischenlagerbehälter sehr schnell auf eine bestimmte Temperatur abzukühlen, was dann auch mit einem relativ hohen Kühlmittelbedarf erfolgen kann. Andererseits ist es aus ökonomischen Gründen nicht immer erwünscht, den Zwischenlagerbehälter mit maximalem Kühlmittelverbrauch besonders schnell oder auf eine sehr tiefe Temperatur abzukühlen. Bei einer solchen Abkühlung des Zwischenlagerbehälters wird im wesentlichen kaltes Stickstoffgas in den Zwischenlagerbehälter ausgeströmt, während feuchte Luft oder ein anderes Gasgemisch aus dem Zwischenlagerbehälter verdrängt wird und durch ein Auslassventil ausgeblasen wird. Dies hat neben der Abkühlung auch den Effekt, dass Feuchtigkeit aus dem Zwischenlagerbehälter entfernt wird, wodurch Eisbildung auf den Proben verhindert werden kann.

In der Regel ist bei dem erfindungsgemäßen Verfahren vor dem Transport einer Probenträgereinrichtung aus dem Kryobehälter in den Zwischenlagerbehälter eine Abkühlung des Zwischenlagerbehälters vorgesehen, um ein Auftauen der Proben in dem Zwischenlagerbehälter zu verhindern. Je nach Zeitdauer, wie lange die Proben in den Zwischenlagerbehälter ausgelagert werden, ist dafür eine Abkühlung auf unterschiedliche Temperaturen notwendig. Beispielsweise ist es für eine kurze Unterbringung der Proben in dem Zwischenlagerbehälter für eine Zeitdauer von weniger als 5 Minuten ausreichend, wenn der Zwischenlagerbehälter auf eine Temperatur von zwischen -10°C und 0°C abgekühlt wird. Für einen längeren Verbleib der Proben in dem Zwischenlagerbehälter von bis zu 15 Minuten ist eine Abkühlung auf -30°C zweckmäßig. Für einen Verbleib der Proben in dem Zwischenlagerbehälter für bis zu 90 Minuten ist eine Lagertemperatur im Zwischenlagerbehälter von -80°C vorteilhaft. Bei dieser Temperatur können Umkristallisierungen in den Proben zuverlässig über eine längere Zeitdauer vermieden werden. Bei einer noch längeren Lagerung der Proben in dem Zwischenlagerbehälter bis zu 12 Stunden ist eine Absenkung der Temperatur des Zwischenlagerbehälters auf eine Temperatur zwischen -80°C und -140°C vorgesehen.

Zur Erfassung des mindestens einen Betriebsparameters der Kryospeichereinrichtung umfasst die Sensoreinrichtung vorzugsweise mindestens einen Sensor. Im Folgenden werden beispielhaft mögliche Sensortypen genannt, die in der Sensoreinrichtung der erfindungsgemäßen Kryospeichereinrichtung und im erfindungsgemäßen Verfahren zum Einsatz kommen können.

Zur Temperaturerfassung an der Probenträgereinrichtung, im Kryobehälter und/oder im Zwischenlagerbehälter können ein Probenträger-Temperatursensor, ein Behälter-Temperatursensor und/oder ein Zwischenlager-Temperatursensor vorgesehen sein.

Zur Erfassung eines Kühlmittelverbrauchs der Kühleinrichtung kann ein Kühlmittel-Sensor eingerichtet sein. Dabei können getrennte Kühlmittel-Sensoren für die Behälterkühleinrichtung und die Zwischenlagerkühleinrichtung vorgesehen sein oder ein gemeinsamer Sensor für eine gemeinsame Versorgungsquelle für Kühlmittel. Entsprechendes gilt für die Erfassung eines Betriebszustands eines Kühlmittelventils der Behälterkühleinrichtung und/oder der Zwischenlagerkühleinrichtung, für die ein oder mehrere Durchfluss-Sensoren vorgesehen sein können. Zur Füllstandsmessung des Kühlmittels im Kryobehälter kann ein Füllstands-Sensor vorhanden sein.

Zur visuellen Überwachung der Proben ist vorzugsweise mindestens eine Kameraeinrichtung vorgesehen, die zur Bildaufnahme in dem Zwischenlagerbehälter oder im Kryobehälter eingerichtet ist. Die Erfassung des mindestens einen Betriebsparameters kann demnach auch eine Bildaufnahme in dem Zwischenlagerbehälter und/oder dem Kryobehälter mit einer Kameraeinrichtung umfassen.

Weiter kann die Sensoreinrichtung auch einen Druck-Sensor umfassen, der zur Erfassung eines Unterdrucks in einer evakuierten Wand des Kryobehälters eingerichtet ist. Damit kann der Zustand der Vakuumisolierung des Kryobehälters überwacht werden.

Die Erfassung des mindestens einen Betriebsparameters der Kryospeichereinrichtung kann auch die Erfassung eines Betriebszustands der Probenträgereinrichtung umfassen. Dafür kann ein Probenträger-Testsensor vorgesehen sein. Ferner kann die Sensoreinrichtung mindestens ein Gas-Sensor zur Erfassung einer Gaszusammensetzung im Kryobehälter und/oder im Zwischenlagerbehälter umfassen. Schließlich kann auch ein Zeitmessgerät vorgesehen sein, welches zum Erfassen einer Zeitdauer eingerichtet ist, beispielsweise eine Dauer, während der sich die Probenträgereinrichtung im Zwischenlagerbehälter befindet.

Vorzugsweise werden mehrere Betriebsparameter der Kryospeichereinrichtung erfasst, um einen vorbestimmten Betriebszustand zu erkennen. Die Sensoreinrichtung umfasst daher vorzugsweise mehrere der genannten Sensortypen zur Bestimmung der Betriebsparameter.

Um während der Beladung der Kryospeichereinrichtung und bei der Entnahme von Proben daraus eine länger dauernde Öffnung der Kryospeichereinrichtung und eine damit verbundene Ewärmung des Innenraums zu vermeiden, weist die erfindungsgemäße Kryospeichereinrichtung vorzugsweise eine Schleuseneinrichtung auf. Diese ist zur Einführung und Entnahme von Proben in einen Innenraum des Zwischenlagerbehälters eingerichtet. Kryoproben können somit durch die Schleuseneinrichtung in den Zwischenlagerbehälter eingeführt werden, wo sie in ein Rack eingeführt werden können. Sobald die Proben sich in dem Rack befinden, können diese mit Hilfe der Transporteinrichtung in den eigentlichen Kryobehälter eingebracht werden. Die Schleuseneinrichtung weist zur Handhabung der Proben in der Schleuseneinrichtung vorzugsweise mindestens einen Handeingriff und ein Sichtfenster auf.

In einer bevorzugten Ausführungsform der Erfindung umfasst der Zwischenlagerbehälter einen Lagerturm, der auf der Oberseite des Kryobehälters angeordnet ist, und eine Zwischenlagerverschlussvorrichtung, mit welcher der Innenraum des Lagerturms lösbar verschließbar ist. Ein Lagerturm ist ein glocken- oder hauben-artiger Behälter mit einer unteren, zum Kryobehälter weisenden Öffnung.

Mit seiner Öffnung kann der Lagerturm auf der Öffnung des Kryotanks aufsitzen und diese abschließen, so dass beide Innenräume miteinander verbunden sind. Mit der Zwischenlagerverschlussvorrichtung kann in diesem Fall der Innenraum des Lagerturms von dem Innenraum des Kryotanks abgetrennt werden. Zwischenlagerverschlussvorrichtung und Verschlussvorrichtung des Kryotanks können auch gleichzeitig verschlossen sein. Der Lagerturm kann auch von dem Kryotank räumlich getrennt werden, indem er beispielsweise angehoben wird. Alternativ kann der Kryotank gegenüber dem Lagerturm abgesenkt werden. Die Zwischenlagerverschlussvorrichtung kann thermisch isoliert sein, so dass der Inhalt des Zwischenlagerbehälters geschützt ist, wenn Kryobehälter und Zwischenlagerbehälter räumlich voneinander getrennt sind. Die Zwischenlagerverschlussvorrichtung und die Verschlussvorrichtung des Kryobehälters können zum Beispiel aus einer oder mehreren Verschlussklappen oder Türen bestehen. Es sind auch mehrteilige Verschlussvorrichtungen möglich, die verschieden große Öffnungen von Kryobehälter bzw. Zwischenlagerbehälter ermöglichen. Vorzugsweise umfasst die Zwischenlagerverschlussvorrichtung eine herausnehmbare Bodenplatte, die unter anderem ein Herausfallen von kaltem Stickstoffgas aus dem Zwischenlagerbehälter verhindern kann.

Gemäß einer bevorzugten Variante des erfindungsgemäßen Verfahrens ist es vorteilhaft, wenn der Innenraum des Zwischenlagerbehälters mit der Zwischenlagerverschlussvorrichtung verschlossen wird, nachdem eine Probenträgereinrichtung vom Kryobehälter in den Zwischenlagerbehälter bewegt worden ist.

In einem Lagerturm ist beispielsweise eine Winde an einem oberen Ende des Lagerturms angebracht. Eine Bewegung der Probenträgereinrichtung erfolgt dann mit Hilfe der Winde auf- oder abwärts zwischen dem Kryobehälter und dem Zwischenlagerbehälter. Alternativ oder zusätzlich kann die Transporteinrichtung einen Roboterarm, eine ausfahrbaren Gestänge oder eine Schiene umfassen. Zusätzlich zu einer Winde ist eine Translationsmechanik sinnvoll, mit welcher die Probenträgereinrichtung horizontal bewegt werden kann. Die Transporteinrichtung kann auch zur regulären Entnahme oder Zugabe von Proben in und aus der Kryospeichereinrichtung verwendet werden.

Erfindungsgemäß weist die Kryospeichereinrichtung eine Steuereinrichtung auf, welche mit der Sensoreinrichtung und der Transporteinrichtung einen Regelkreis bildet. Die Steuereinrichtung ist vorzugsweise eingerichtet einen Störzustand der Kryospeichereinrichtung zu erfassen. Von der Sensoreinrichtung erfasste Betriebsparameter der Kryospeichereinrichtung werden an die Steuereinrichtung ausgegeben. Diese ermittelt auf Grundlage der Sensorsignale bzw. Betriebsparameter einen Betriebszustand. Ein Betriebszustand kann ein Störzustand sein, beispielsweise eine Überfüllung mit flüssigem Stickstoff, eine unzulässige Erwärmung der Proben, nachlassende Isolierung des Kryotanks, oder auch ein defektes Rack, ein defekter Kryobehälter, oder ähnliches. Bei den Betriebszuständen muss es sich jedoch nicht um Störzustände handeln. Es kann auch ein Nachtankzustand beim regulären Nachfüllen von Stickstoff sein, oder auch die Feststellung einer bestimmten Zeitdauer, seit der sich eine Probenträgereinrichtung in dem Zwischenlagerbehälter befindet. In Abhängigkeit von dem erfassten Betriebszustand werden dann von der Steuereinrichtung Steuersignale zur Aktivierung an die Transporteinrichtung und/oder die Zwischenlagerkühleinrichtung ausgegeben.

Für den Betrieb der Kryospeichereinrichtung ist es vorteilhaft, wenn bestimmte Betriebsmodi für unterschiedliche vorbestimmte Betriebszustände vorgesehen sind. Beispielsweise besteht hauptsächlich während der Zufuhr von Kühlmittel in den Kryobehälter die Gefahr einer Überfüllung mit flüssigem Kühlmittel. Daher ist gemäß einer bevorzugten Variante des erfindungsgemäßen Verfahrens vorgesehen, die Probenträgereinrichtung vorsorglich in den Zwischenlagerbehälter zu transportieren und dort zu belassen, während eine Zufuhr von Kühlmittel in den Kryobehälter erfolgt.

Sofern die Probenträgereinrichtung mehrere Trägerteile umfasst, kann es zum Beispiel bei Feststellung einer Überfüllung oder bei Erfassung eines anderen vorbestimmten Betriebszustandes sinnvoll sein, alle Trägerteile gleichzeitig in den Zwischenlagerbehälter zu bewegen. Dies hat den Vorteil, dass alle Probenträgerteile gleichzeitig und schnell gesichert werden können.

Im Fall eines defekten Kryobehälters oder einer defekten Probenträgereinrichtung muss das defekte Teil in der Regel ausgetauscht werden. In diesem Fall ist ein weiterer Betriebsmodus vorteilhaft. Dieser umfasst den Transport der Probenträgereinrichtung oder eines Teilträgers davon in den Zwischenlagerbehälter und nachfolgend eine räumliche Trennung vom Zwischenlagerbehälter und Kryobehälter, beispielsweise durch eine Absenkung oder Anhebung eines Teils. Zusätzlich kann eine horizontale Verschiebung von Kryobehälter und Zwischenlagerbehälter relativ zueinander sinnvoll sein. Eine defekte Probenträgereinrichtung kann dann nach unten aus dem Zwischenlagerbehälter herausgezogen werden und ersetzt werden. Ein defekter Kryobehälter kann ausgetauscht werden, bevor beide Teile wieder zusammengesetzt werden. Zweckmäßig erfolgt ein Zusammensetzen von Zwischenlagerbehälter und Kryobehälter erst nachdem die ausgetauschte Komponente wieder auf ihre Betriebstemperatur abgekühlt wurden.

Je nach erfasstem Betriebszustand der Kryospeichereinrichtung können unterschiedliche Maßnahmen zur Sicherung der Proben erforderlich sein. Damit verbunden sind unterschiedliche Aufenthaltszeiten der Probenträgereinrichtung in dem Zwischenlagerbehälter zu erwarten. Für kurze Aufenthaltszeiten der Probenträgereinrichtung im Zwischenlagerbehälter sind weniger tiefe Temperaturen nötig sind als für lange Aufenthaltszeiten. Daher wird der Zwischenlagerbehälter für eine kurze Auslagerung von beispielsweise fünf bis zehn Minuten nur auf -30°C abgekühlt. Der Zwischenlagerbehälter wird demnach nur auf eine für die zu erwartende Lagerdauer ausreichende vorbestimmte Temperatur abgekühlt, bevor die Probenträgereinrichtung in den auf die vorbestimmte Temperatur gekühlten Zwischenlagerbehälter transportiert wird. Damit kann ein unnötig hoher Energieverbrauch und Kühlmittelverbrauch vermieden werden.

Eine vorteilhafte Weiterbildung des erfindungsgemäßen Verfahrens umfasst daher die Erfassung eines vorbestimmten Betriebszustandes der Kryospeichereinrichtung, die Abkühlung des Zwischenlagerbehälters mit der Zwischenlagerkühleinrichtung auf eine vorbestimmte Temperatur in Abhängigkeit von dem erfassten Betriebszustand, einen Transport der Probenträgereinrichtung in den Zwischenlagerbehälter und die Erfassung der Zeitdauer, während der sich die Probenträgereinrichtung in dem Zwischenlagerbehälter befindet. Bei einem Überschreiten einer in Abhängigkeit von der vorbestimmten Temperatur vorbestimmten maximalen Zeitdauer, erfolgt eine Abkühlung des Zwischenlagerbehälters auf eine vorbestimmte zweite Temperatur und/oder die Ausgabe eines Alarmsignals. Die Zeitdauer während der sich die Probenträgereinrichtung in dem Zwischenlagerbehälter befindet, wird durch ein Zeitmessgerät erfasst. Sobald eine für die Temperatur des Zwischenlagerbehälters maximale Lagerdauer überschritten wird, kann ein Alarmsignal ertönen, und/oder der Zwischenlagerbehälter auf eine tiefere Temperatur, welche für eine längere Lagerdauer ausreichend ist, abgekühlt werden. Mit diesem Betriebsmodus können beispielsweise Proben gesichert werden, auch wenn sich die Behebung einer Störung unerwartet verzögert, und so die Lagerzeit der Proben in dem Zwischenlagerbehälter verlängert werden muss.

Falls eine weitere Abkühlung des Zwischenlagerbehälters nicht möglich ist, weil bereits mit der maximalen Kühlleistung gekühlt wird oder bereits eine Minimaltemperatur erreicht ist, kann bei Überschreiten einer maximalen Lagerdauer z.B. von zwölf Stunden im Zwischenlagerbehälter ein akustisches oder optisches Alarmsignal ausgegeben werden.

Im Folgenden soll die Erfindung anhand der in den Figuren 1 bis 8 dargestellten Ausführungsbeispiele näher erläutert werden. Es zeigen schematisch:
- Figur 1: eine erfindungsgemäße Kryospeichereinrichtung in vertikaler Schnittansicht mit einer Steuereinheit;
- Figur 2: eine detailliertere Schnittansicht einer erfindungsgemäßen Kryospeichereinheit mit einer Schleuseneinrichtung;
- Figur 3: eine Schnittansicht einer erfindungsgemäßen Kryospeichereinheit, bei welcher sich ein Teilträger der Probenträgereinheit in dem Zwischenlagerbehälter befindet;
- Figur 4: eine weitere Schnittansicht einer erfindungsgemäßen Kryospeichereinheit, bei welcher sich alle Teilträger der Probenträgereinrichtung in dem Kryobehälter befinden;
- Figur 5: eine horizontale Schnittansicht durch eine erfindungsgemäße Kryospeichereinrichtung mit Schleuseneinrichtung und zwei Handeingriffen;
- Figur 6: einen horizontalen Schnitt durch eine erfindungsgemäße Kryospeichereinrichtung mit Schleuseneinrichtung und einem Handeingriff;
- Figur 7: einen vertikalen Schnitt durch eine erfindungsgemäße Kryospeichereinrichtung im Störzustand, bei welcher die gesamte Probenträgereinrichtung sich in dem Zwischenlagerbehälter befindet; und
- Figur 8: eine vertikale Schnittansicht durch eine erfindungsgemäße Kryospeichereinrichtung im Störzustand, bei welcher sich die Probenträgereinrichtung in dem verschlossenen Zwischenlagerbehälter befindet, und bei dem Zwischenlagerbehälter und Kryobehälter voneinander räumlich getrennt sind.

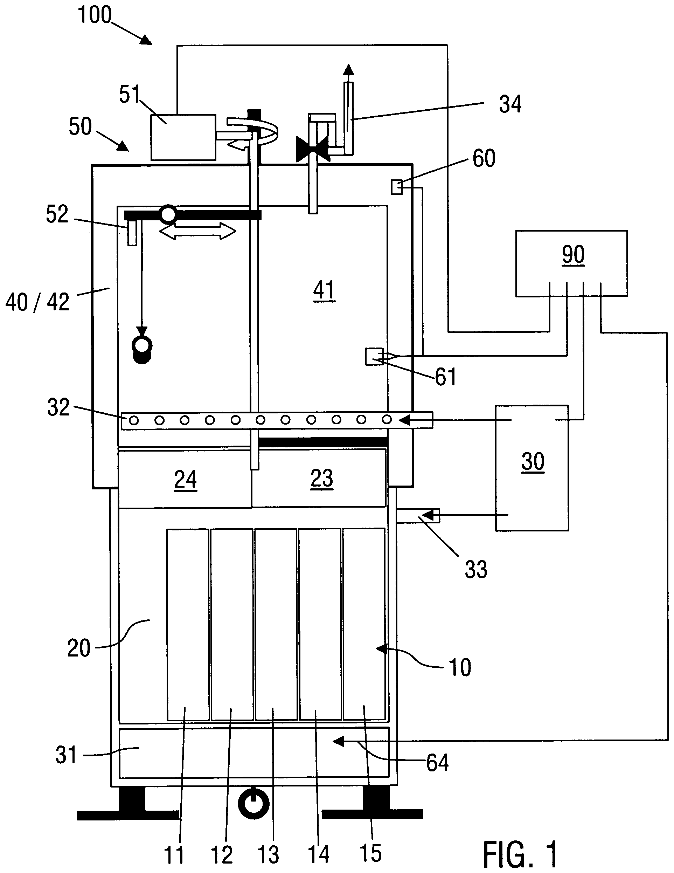

Die Schnittansicht in Figur 1 zeigt eine Kryospeichereinrichtung 100 mit einem Kryobehälter 20, umfassend eine zylinderförmigen Kryotank mit einer durch Vakuum thermisch isolierten Wandung. Eine Probenträgereinrichtung 10, umfassend mehrere Trägerteile 11 bis 15, ist in dem Kryobehälter aufgenommen. Unterhalb der Probenträgereinrichtung 10 ist ein Flüssigkeitsbad 31 mit flüssigem Stickstoff angeordnet, so dass sich die Probenträgereinrichtung 10 in der Gasphase über dem flüssigen Stickstoffbad befindet. Das Flüssigkeitsbad wird aus einer Kühleinrichtung 30 mit einer Nachtankleitung 33 für flüssigen Stickstoff gespeist. Ein Füllstandsmesser 64 dient der Überwachung der Stickstoffmenge im Kryobehälter 20.

Der Kryobehälter 20 hat an seinem oberen Ende eine Öffnung, welche durch thermisch isolierte Deckelteile 23 und 24 verschlossen ist. Auf dem Kryobehälter 20 ist ein Zwischenlagerbehälter 40 angeordnet. Der Zwischenlagerbehälter 40 ist als im Wesentlichen zylinderförmiger Lagerturm 42 mit einer Öffnung an seiner Unterseite ausgestaltet. Der Lagerturm 42 sitzt so auf dem Kryobehälter 20, dass die Öffnung des Kryobehälters mit der Öffnung des Lagerturms 42 zusammenfällt und von der die Öffnung umgebende Wand des Lagerturms 42 vollständig umschlossen ist. Vorzugsweise sitzt der Lagerturm 42 so fest auf der Öffnung des Kryobehälters 20, dass eine im Wesentlichen gasdichte Verbindung entsteht. Ein gasdichter Abschluss des Zwischenlagerbehälters ist vor allem dann wichtig, wenn dieser auf sehr tiefe Temperaturen unterhalb von - 80°C abgekühlt wird, um eine Eisbildung im Innenraum zu vermeiden. Der Zwischenlagerbehälter 40, bzw. der Lagerturm 42 ist thermisch isoliert und mit einer Zwischenlagerkühleinrichtung 32 ausgestattet. Diese umfasst einen Kühlgaseinlass, durch welchen Stickstoffgas in den Innenraum des Zwischenlagerbehälters ausströmen kann. Am oberen Ende des Lagerturms 42 befindet sich ein Gasauslass 34.

Zum Transport der Probenträgereinrichtung 10 zwischen Kryobehälter 20 und Lagerturm 42 ist eine Transporteinrichtung 50 mit einer Winde 51 und einer Translationsmechanik 52 eingebaut. Die Kryospeichereinrichtung 100 verfügt außerdem über eine Sensoreinrichtung 60 zur Erfassung mindestens eines Betriebsparameters der Kryospeichereinrichtung. Beispielhaft ist in Figur 1 neben dem Füllstand-Sensor 64 im flüssigen Stickstoffbad 31 ein Temperatur-Sensor 61 im Zwischenlagerbehälter 40 dargestellt. Die Sensoren 61, 64 sind mit einer Steuereinheit 90 verbunden, welche auf Basis der von den Sensoren 61, 64 erhaltenen Signale die Zwischenlagerkühleinrichtung 32 und die Transporteinrichtung 50 ansteuert.

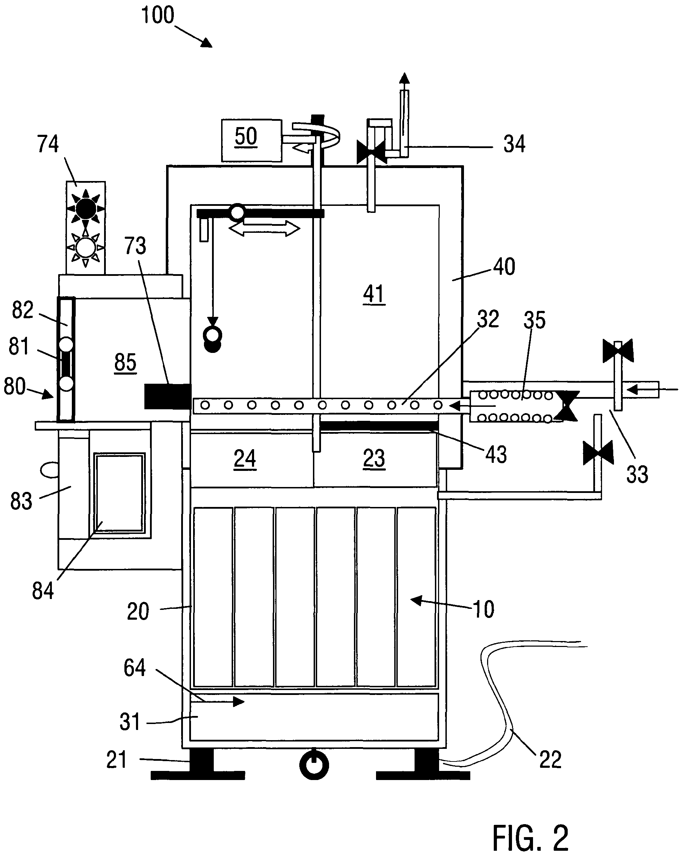

Die Zwischenlagerkühleinrichtung 32 wird von derselben Quelle flüssigen Stickstoffs gespeist, wie die Kühleinrichtung 30 des Kryotanks 20, wie in Figur 2 dargestellt. Die Kühlung des Zwischenlagerbehälters 40 erfolgt durch Ausströmung von gasförmigem Stickstoff. Daher verfügt die Zwischenlagerkühleinrichtung 32 über eine Heizeinrichtung 35 zur Verdampfung des flüssigen Stickstoffs.

Die in Figur 2 dargestellte Kryospeichereinrichtung 100 verfügt außerdem über eine Schleuseneinrichtung 80 zum Einführen und Ausführen von Kryoproben in die Kryospeichereinrichtung 100. Die Schleuseneinrichtung 80 umfasst einen Schleusenraum 85 mit einem Sichtfenster 82 und einem Handeingriff 81, sowie eine Tür 83 zum Entnehmen und Einführen von Proben in den Schleusenraum. Zusätzlich ist ein Aufnahmeraum für einen Transportbehälter von Kryoproben 84 vorgesehen. Ein Barcodeleser 73 dient der Überwachung des Transports von Proben zwischen Schleuseneinrichtung 80 und Zwischenlagerbehälter 40. Auf der Schleuseneinrichtung 80 ist eine Alarmanzeige 74 angebracht, die einen Störzustand der Kryospeichereinrichtung 100 durch ein optisches und/oder ein akustisches Signal anzeigen kann.

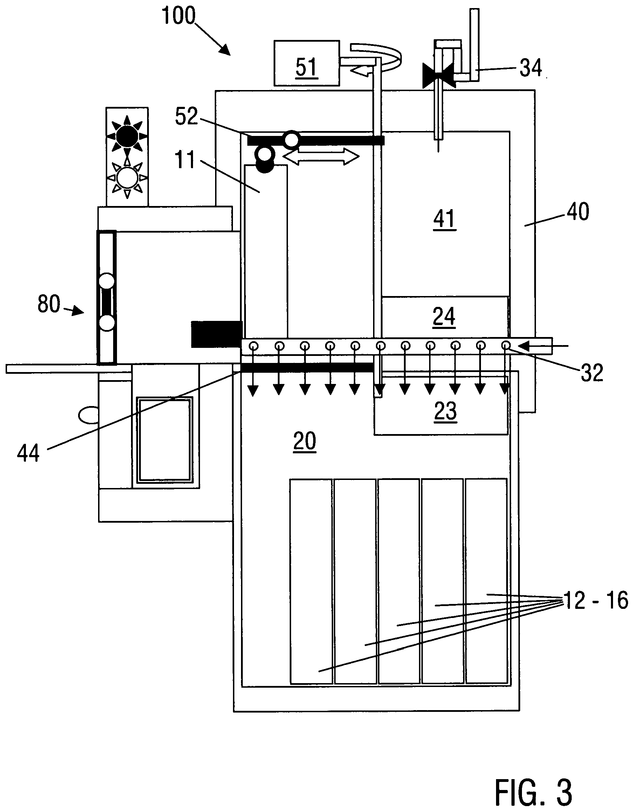

Figur 3 zeigt eine Kryospeichereinrichtung mit geöffnetem Kryotank. Ein Deckelteil 23 des Kryotanks befindet sich noch in einer Schließposition, während ein zweiter Deckelteil 24 aus der Schließposition herausgeklappt ist. Die Probenträgereinrichtung 10 umfasst bei der in Figur 3 dargestellten Kryospeichereinrichtung 100 mehrere Trägerteile 11 bis 16, wovon ein Trägerteil 11 sich in dem Zwischenlagerbehälter befindet, während sich die übrigen Trägerteile 12 bis 16 noch in dem Kryotank befinden. Der im Zwischenlagerbehälter 40 befindliche Trägerteil 11 hängt mit einer Kopplungseinrichtung an der Translationsmechanik 52 der Transporteinrichtung. Unterhalb des Trägerteils im Zwischenlagerbehälter ist ein Auffangblech 44 in der Öffnung zwischen Zwischenlagerbehälter 40 und Kryotank 20 angeordnet, um herunterfallende Proben aufzufangen oder im Bedarfsfall für eine Notisolation des Tanks zu sorgen. Der in Figur 3 dargestellte Zustand der Kryospeichereinrichtung 100 wird beispielsweise eingenommen, wenn ein einzelnes Rack 11 defekt ist und ausgetauscht werden soll.

Für den Austausch des Racks 11 wird dessen Inhalt zunächst kontrolliert ausgelagert. Anschließend wird der Zwischenlagerbehälter von dem Kryobehälter abgehoben und verschoben, so dass das defekte Rack 11 nach unten durch die Öffnung des Zwischenlagerbehälters 40 entfernt und durch ein neues Rack ersetzt werden kann. Zweckmäßig wird der Kryobehälter 20 zur Aufrechterhaltung der Isolation zuvor verschlossen. Nachdem das defekte Rack ersetzt wurde kann der Zwischenlagerbehälter 40 wieder auf den Kryobehälter aufgesetzt werden. Vorzugsweise wird das neue Rack in diesem Fall im Zwischenlagerbehälter eingekühlt bevor es wieder mit Proben bestückt wird und in den wieder geöffneten Kryobehälter transportiert wird.

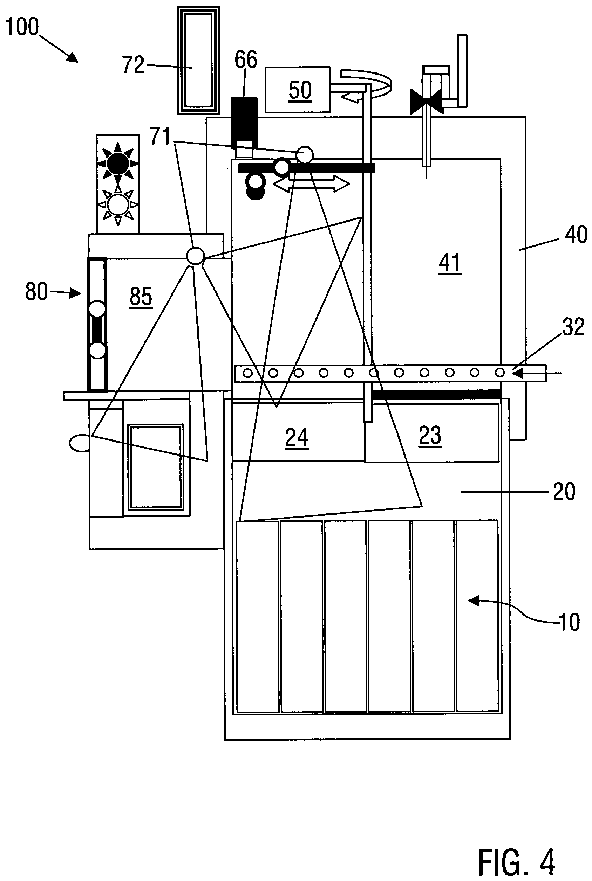

Figur 4 zeigt eine Schnittansicht einer Kryospeichereinrichtung 100 mit einer Schleuseneinrichtung 80 im normalen Lagerzustand, bei der sich alle Trägerteile 11 bis 16 der Probenträgereinrichtung 10 im durch die Deckelteile 23 und 24 dicht verschlossenen Kryotank 20 befinden.

Um Proben während der Lagerung im Zwischenlagerbehälter 40 oder in der Schleuse 80 überwachen zu können, befinden sich im Schleusenraum 85 und im Zwischenlagerbehälter 40 Lampen 71 zur Beleuchtung des Schleusenraums 85 und des Innenraums des Zwischenlagerbehälters. Die beleuchteten Zonen sind in Figur 4 beispielhaft dargestellt. Zusätzlich ist eine Kameraeinrichtung 66 zur Bildaufnahme des Innenraums des Zwischenlagerbehälters vorgesehen. An einem Monitor 72 können die von der Kamera aufgenommenen Bilddaten dargestellt werden.

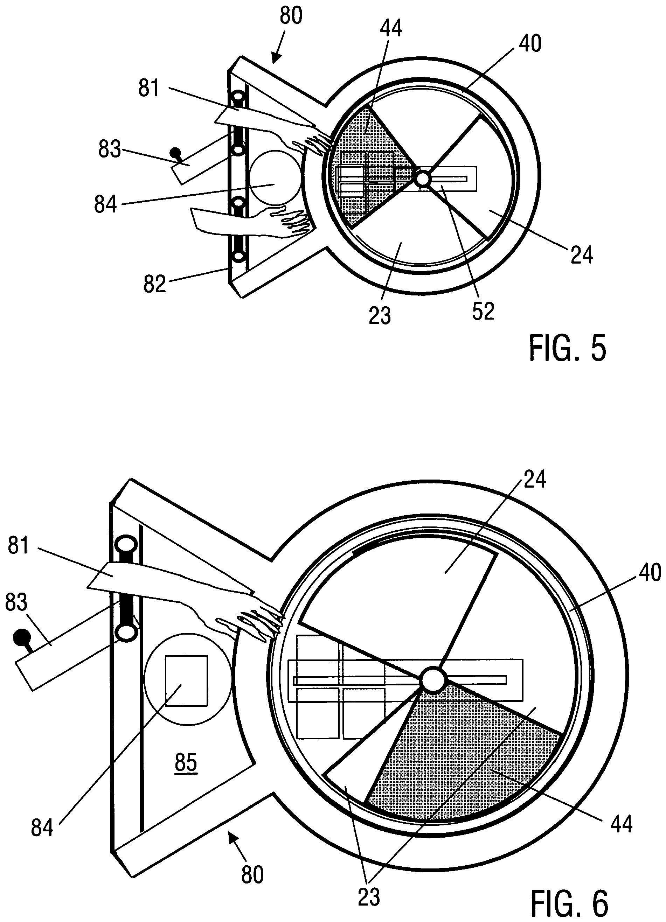

Bei im Wesentlichen zylinderförmigem Kryotank 20 und Zwischenlagerbehälter 40 können die Verschlussteile 23, 24 des Kryotanks und die Zwischenlagerverschlussvorrichtung 43 des Zwischenlagerbehälters 40 sektorförmig gestaltet sein, wie beispielsweise in der Schnittansicht in Figur 5 dargestellt. Die Deckelteile 23, 24 und 44 sind um eine vertikale zentrale Achse der zylinderförmigen Kryobehälter und Zwischenlagerbehälter drehbar. In Figur 5 zu sehen ist ein Auffangblech 44 als Teil einer Zwischenlagerverschlussvorrichtung 43 und ein Verschlussteil 24 des Kryotanks 20. Darunter sind in der Darstellung schematisch die in dem Kryotank angeordneten Proben und eine Schiene der Translationsmechanik 52 im Zwischenlagerbehälter 40 zu sehen.

Die in Figur 5 dargestellte Ausführungsform der Kryospeichereinrichtung hat eine Schleuseneinrichtung 80, welche sektorförmig außen am Zwischenlagerbehälter 40 angeordnet ist, und durch ein ebenes Sichtfenster 82 abgeschlossen ist. Die Schleuseneinrichtung 80 hat eine Tür 83 und eine Probenaufnahme 84, um einen Transportbehälter für Kryoproben aufzunehmen. Die Schleuseneinrichtung 80 weist zwei Handeingriffe 81 auf, durch welche ein Benutzer in den Schleusenraum 85 hineingreifen kann. Die Handeingriffe können mit Sicherheitshandschuhen ausgestattet sein, welche die Hände des Benutzers vor Kälte, und den Schleusenraum 85 vor Kontamination schützen.

Figur 6 zeigt eine Variante der Kryospeichereinrichtung mit nur einem Handeingriff 81 für den Schleusenraum 85. In Figur 6 sind auch die sektorförmigen Deckelteile zu sehen, wobei ein Deckelteil 24 einen Viertelkreis abdeckt und ein Deckelteil 23 einen Dreiviertelkreis abdeckt.

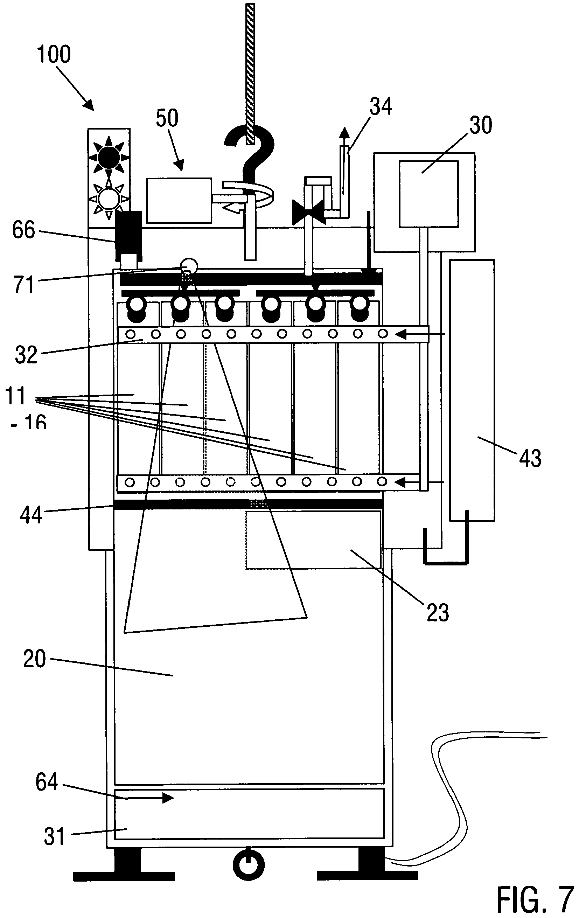

In Figur 7 ist eine erfindungsgemäße Kryospeichereinrichtung 100 gezeigt, bei welcher sich alle Trägerteile 11 bis 16 der Probenträgereinrichtung 10 im Zwischenlagerbehälter 40 befinden. Alle Trägerteile 11 bis 16 hängen an einer Kopplungseinrichtung der Transporteinrichtung 50. Der Kryotank 20 ist halb geöffnet. Ein Zwischenboden 44 verschließt den Zwischenlagerbehälter nach unten. Die Zwischenlagerkühleinrichtung 32 wird durch die Kühleinrichtung 30 mit Stickstoff versorgt. Außen am Zwischenlagerbehälter ist eine Zwischenlagerverschlussvorrichtung 43 hochgeklappt, welche zum vollständigen und isolierten Verschließen des Zwischenlagerbehälters vorgesehen ist. Der in Figur 7 gezeigte Zustand wird bei der erfindungsgemäßen Kryospeichereinrichtung 100 und gemäß dem erfindungsgemäßen Verfahren beispielsweise im Störfall eingenommen, wenn bei eintretender Überfüllung des flüssigen Stickstoffbades 31 am Boden des Kryotanks 20 Gefahr für die im Probenträger 10 gelagerten Kryoproben besteht. Dieser Zustand kann auch als Vorsichtsmaßnahme beim Betanken des Kryobehälters 20 mit flüssigem Stickstoff vorsorglich eingenommen werden.

Eine eintretende Überfüllung mit flüssigem Stickstoff wird als Betriebszustand beispielsweise anhand eines Signals des Füllstandssensors 64 im Flüssigkeitsbad 31 und anhand eines Betriebszustands der Kühleinrichtung 30 mit Hilfe eines Durchfluss-Sensors erkannt. Wenn aufgrund der erfassten Betriebsparameter der Betriebszustand einer Überfüllung festgestellt wird, wird die Zwischenlagerkühleinrichtung 32 aktiviert und die Kühlung des Zwischenlagerbehälters 40 gestartet sowie die Probenträgereinrichtung 10 in den Zwischenlagerbehälter 40 transportiert. Zusätzlich kann zeitgleich ein Alarmsignal ausgegeben werden.

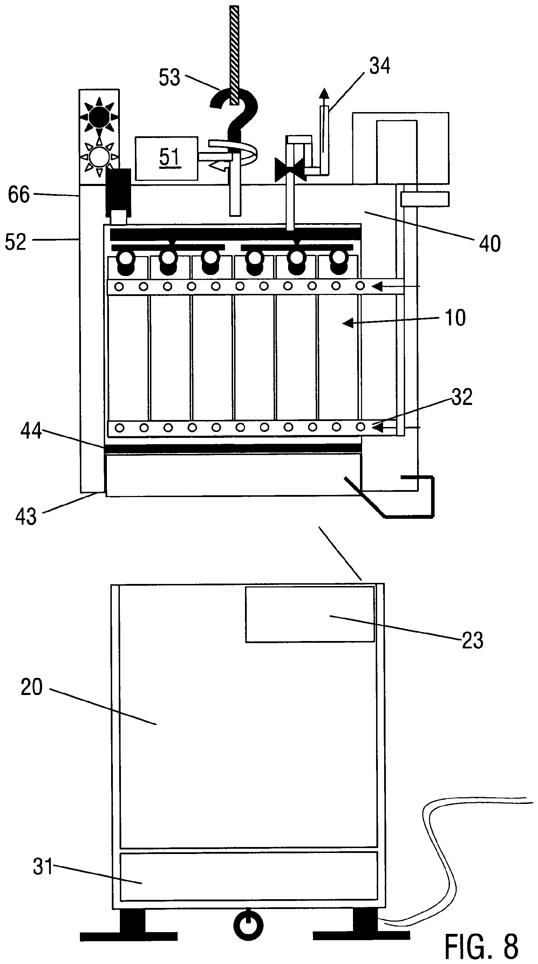

Figur 8 zeigt schließlich die Kryospeichereinrichtung 100 aus Figur 7, bei welcher der Zwischenlagerbehälter 40 mit einer Hebevorrichtung 53 vom Kryobehälter 20 abgehoben ist mit geschlossener Zwischenlagerverschlussvorrichtung 43. Der Zwischenlagerbehälter ist nun selbständig gekühlt und isoliert und abhängig von der Temperatur in seinem Innenraum 41 für die kurzfristige Lagerung von Kryoproben geeignet. Während dessen kann beispielsweise der Kryotank 20 ausgetauscht oder repariert werden oder eine Überfüllung mit flüssigem Stickstoff beseitigt werden. In der Zwischenzeit sind die Kryoproben in dem gekühlten Zwischenlagerbehälter 40 sicher verstaut. Ein schnelles und unkontrolliertes Entnehmen der Kryoproben in eine zimmerwarme Atmosphäre ist nicht nötig. Dadurch werden unerwünschte Einwirkungen auf die Proben, wie mechanische Erschütterungen oder eine Erwärmung der Proben sowie Eisbildung vermieden.

## Patentansprüche

1. Kryospeichereinrichtung (100), insbesondere zur Kryospeicherung biologischer Proben, umfassend:
(a) eine Probenträgereinrichtung (10), die zur Aufnahme der Proben eingerichtet ist,
(b) einen Kryobehälter (20), der zur Aufnahme der Probenträgereinrichtung (10) eingerichtet ist,
(c) eine Behälterkühleinrichtung (30), mit welcher der Kryobehälter (20) kühlbar ist,
(d) einen Zwischenlagerbehälter (40), der zur Zwischenlagerung der Probenträgereinrichtung (10) eingerichtet ist,
(e) eine Transporteinrichtung (50), mit der die Probenträgereinrichtung (10) zwischen dem Kryobehälter (20) und dem Zwischenlagerbehälter (40) beweglich ist, und
(f) eine Sensoreinrichtung (60), mit der mindestens ein Betriebsparameter der Kryospeichereinrichtung (100) erfassbar und die mit einer Steuereinrichtung (90) verbunden ist, wobei
(g) die Steuereinrichtung (90) mit der Sensoreinrichtung (60) und der Transporteinrichtung (50) einen Regelkreis bildet, wobei die Steuereinrichtung (90) derart ausgebildet ist, die Transporteinrichtung (50) in Abhängigkeit von einem Ausgangssignal der Sensoreinrichtung (60) bei Erfassung eines vorbestimmten Betriebszustandes der Kryospeichereinrichtung (100), umfassend einen Störzustand der Kryospeichereinrichtung (100) oder einen Betankungszustand während einer Nachfüllung von flüssigem Stickstoff in den Kryobehälter (20), zu aktivieren, um die Probenträgereinrichtung (10) vom Kryobehälter (20) in den Zwischenlagerbehälter (40) zu bewegen, und wobei die Kryospeichereinrichtung (100) eine Zwischenlagerkühleinrichtung (32) aufweist, mit welcher der Zwischenlagerbehälter (40) kühlbar ist, wobei die Zwischenlagerkühleinrichtung (32) in Abhängigkeit von einem Ausgangssignal der Sensoreinrichtung (60) bei Erfassung des vorbestimmten Betriebszustandes der Kryospeichereinrichtung (100) aktiviert wird.

2. Kryospeichereinrichtung gemäß Anspruch 1, bei der die Sensoreinrichtung (60) mindestens einen der Sensortypen aufweist, die umfassen:
- einen Probenträger-Temperatursensor, der zur Temperaturerfassung an der Probenträgereinrichtung (10) eingerichtet ist,
- einen Behälter-Temperatursensor, der zur Temperaturerfassung im Kryobehälter (20) eingerichtet ist,
- einen Zwischenlager-Temperatursensor (61), der zur Temperaturerfassung im Zwischenlagerbehälter (40) eingerichtet ist,
- einen Kühlmittel-Sensor, der zur Erfassung eines Kühlmittelverbrauchs der Kühleinrichtung (30) eingerichtet ist,
- einen Füllstandsensor (64) im Kryobehälter (20),
- einen Durchfluss-Sensor, der zur Erfassung eines Betriebszustands eines Kühlmittelventils der Kühleinrichtung (30) eingerichtet ist,
- eine Kameraeinrichtung (66), die zur Bildaufnahme in dem Zwischenlagerbehälter (40) und/oder dem Kryobehälter (20) eingerichtet ist,
- einen Druck-Sensor, der zur Erfassung eines Unterdrucks in einer evakuierten Wand des Kryobehälters (20) eingerichtet ist,
- einen Probenträger-Testsensor, der zur Erfassung eines Betriebszustands der Probenträgereinrichtung (10) eingerichtet ist, und
- einen Gassensor zur Erfassung einer Gaszusammensetzung im Kryobehälter (20) und/oder im Zwischenlagerbehälter (40), und/oder
- ein Zeitmessgerät zur Erfassung einer Zeitdauer, während der sich die Probenträgereinrichtung (10) in dem Zwischenlagerbehälter (40) befindet.

3. Kryospeichereinrichtung gemäß einem der vorhergehenden Ansprüche,
welche eine Schleuseneinrichtung (80) aufweist, die zur Einführung und/oder Entnahme von Proben in den Zwischenlagerbehälter (40) eingerichtet ist.

4. Kryospeichereinrichtung gemäß einem der vorhergehenden Ansprüche, bei welcher der Zwischenlagerbehälter (40) umfasst:
- einen Lagerturm (42), der auf einer Oberseite des Kryobehälters (20) angeordnet ist, und
- eine Zwischenlagerverschlussvorrichtung (43), mit welcher ein Innenraum (41) des Lagerturms (42) verschließbar ist.

5. Kryospeichereinrichtung gemäß einem der vorhergehenden Ansprüche, bei der die Transporteinrichtung (50)
- eine Winde (51), die an einem oberen Ende des Lagerturms (42) angeordnet ist,
- einen Roboterarm, und/oder
- ein ausfahrbares Gestänge umfasst.

6. Verfahren zum Betrieb einer Kryospeichereinrichtung (100) umfassend einen Kryobehälter (20), der mit einer Behälterkühleinrichtung (31) gekühlt wird, und einen Zwischenlagerbehälter (40), der zur Zwischenlagerung einer Probenträgereinrichtung (10) eingerichtet ist und eine Transporteinrichtung (50) aufweist, mit der die Probenträgereinrichtung (10) zwischen dem Kryobehälter (20) und dem Zwischenlagerbehälter (40) beweglich ist, mit den Schritten:
(a) Kryospeicherung von biologischen Proben, die in der Probenträgereinrichtung (10) angeordnet sind, in dem Kryobehälter (20), und
(b) Erfassung von mindestens einem Betriebsparameter der Kryospeichereinrichtung (100) mit einer Sensoreinrichtung (60), die mit einer Steuereinrichtung (90) verbunden ist, wobei
(c) die Steuereinrichtung (90) mit der Sensoreinrichtung (60) und der Transporteinrichtung (50) einen Regelkreis bildet, wobei bei Erfassung eines vorbestimmten Betriebszustandes der Kryospeichereinrichtung (100), umfassend einen Störzustand der Kryospeichereinrichtung (100) oder einen Betankungszustand während einer Nachfüllung von flüssigem Stickstoff in den Kryobehälter (20),
- die Transporteinrichtung (50) in Abhängigkeit von einem Ausgangssignal der Sensoreinrichtung (60) aktiviert wird und die Probenträgereinrichtung (10) vom Kryobehälter (20) in den Zwischenlagerbehälter (40) bewegt wird, und
- eine Zwischenlagerkühleinrichtung (32), die zur Kühlung des Zwischenlagerbehälters (40) eingerichtet ist, in Abhängigkeit von dem Ausgangssignal der Sensoreinrichtung (60) aktiviert wird.

7. Verfahren gemäß Anspruch 6, bei dem die Erfassung des mindestens einen Betriebsparameters der Kryospeichereinrichtung (100) umfasst:
- Temperaturerfassung an der Probenträgereinrichtung (10) mit einem Probenträger-Temperatursensor,
- Temperaturerfassung im Kryobehälter (20) mit einem Behälter-Temperatursensor,
- Temperaturerfassung im Zwischenlagerbehälter (20) mit einem Zwischenlager-Temperatursensor (61),
- Erfassung eines Kühlmittelverbrauchs der Kühleinrichtung (30) mit einem Kühlmittel-Sensor,
- Füllstandsmessung im Kryobehälter (20) mit einem Füllstandsensor (64),
- Erfassung eines Betriebszustands eines Kühlmittelventils der Kühleinrichtung (30) mit einem Durchfluss-Sensor,
- Bildaufnahme in dem Zwischenlagerbehälter (40) und/oder dem Kryobehälter (20) mit einer Kameraeinrichtung (66),
- Erfassung eines Unterdrucks in einer evakuierten Wand des Kryobehälters (20) mit einem Druck-Sensor,
- Erfassung eines Betriebszustands der Probenträgereinrichtung (10) mit einem Probenträger-Testsensor,
- Erfassung einer Gaszusammensetzung in dem Kryobehälter (20) und/oder in dem Zwischenlagerbehälter (40) mit einem Gassensor, und/oder
- Erfassung der Zeitdauer, während der sich die Probenträgereinrichtung (10) in dem Zwischenlagerbehälter (40) befindet mit einem Zeitmessgerät.

8. Verfahren gemäß einem der Ansprüche 6 bis 7, mit dem Schritt:
- Verschließen eines Innenraums des Zwischenlagerbehälters (40) mit einer Zwischenlagerverschlussvorrichtung (43), nachdem eine Probenträgereinrichtung (10) vom Kryobehälter (20) in den Zwischenlagerbehälter (40) bewegt worden ist.

9. Verfahren gemäß einem der Ansprüche 6 bis 8, mit dem Schritt: Bewegung der Probenträgereinrichtung (10)
- mit einer Winde (51), welche an einem oberen Ende des Zwischenlagerbehälters (40) angeordnet ist (51),
- mit einem Roboterarm, oder
- mit einem ausfahrbaren Gestänge.

10. Verfahren gemäß einem der Ansprüche 6 bis 9, mit dem Schritt:
- Bewegung der Probenträgereinrichtung (10) in den Zwischenlagerbehälter (40), während eine Zufuhr von Kühlmittel in den Kryobehälter (20) erfolgt.

11. Verfahren gemäß einem der Ansprüche 6 bis 10, bei dem
- die Probenträgereinrichtung (10) mehrere Trägerteile (11) umfasst, wobei
- bei Erfassung des vorbestimmten Betriebszustandes der Kryospeichereinrichtung (100) alle Trägerteile (11) gleichzeitig in den Zwischenlagerbehälter (40) bewegt werden.

12. Verfahren gemäß einem der Ansprüche 6 bis 11, mit den Schritten:
- Transport der Probenträgereinrichtung (10) in den Zwischenlagerbehälter (40),
- räumliche Trennung des Zwischenlagerbehälters (40) vom Kryobehälter (20).

13. Verfahren gemäß einem der Ansprüche 6 bis 12, mit den Schritten:
- Erfassung eines vorbestimmten Betriebszustandes der Kryospeichereinrichtung (100)
- Abkühlung des Zwischenlagerbehälters (40) mit der Zwischenlagerkühleinrichtung (32) auf eine vorbestimmte Temperatur in Abhängigkeit von dem erfassten Betriebszustand,
- Transport der Probenträgereinrichtung (10) in den abgekühlten Zwischenlagerbehälter (40),
- Erfassen der Zeitdauer der Einlagerung der Probenträgereinrichtung (10) in dem Zwischenlagerbehälter (40), und
- Abkühlung des Zwischenlagerbehälters auf eine vorbestimmte zweite Temperatur und/oder Ausgabe eines Alarmsignals bei Überschreiten einer in Abhängigkeit der vorbestimmten Temperatur vorbestimmten maximalen Zeitdauer.

## Claims

1. Cryogenic storage device (100), in particular for the cryogenic storage of biological samples, comprising:
(a) a sample carrier device (10) which is adapted to accommodate the samples,
(b) a cryogenic container (20) which is adapted to accommodate the sample carrier device (10),
(c) a container cooling device (30) by means of which the cryogenic container (20) can be cooled,
(d) an intermediate storage container (40) which is adapted for an intermediate storage of the sample carrier device (10),
(e) a transport device (50) by means of which the sample carrier device (10) can be moved between the cryogenic container (20) and the intermediate storage container (40), and
(f) a sensor device (60) by means of which at least one operating parameter of the cryogenic storage device (100) can be detected and which is coupled with a control device (90), wherein
(g) the control device (90) together with the sensor device (60) and the transport device (50) forms a control loop, wherein the control device (90) is configured to activate the transport device (50) as a function of an output signal of the sensor device (60) upon detection of a predetermined operating state of the cryogenic storage device (100), comprising a malfunction state of the cryogenic storage device (100) or a refilling state during a refilling with liquid nitrogen into the cryogenic container (20), in order to move the sample carrier device (10) from the cryogenic container (20) into the intermediate storage container (40), and
wherein the cryogenic storage device (100) comprises an intermediate storage cooling device (32), by means of which the intermediate storage container (40) can be cooled, wherein the intermediate storage cooling device (32) can be activated as a function of an output signal of the sensor device (60) upon detection of the predetermined operating state of the cryogenic storage device (100).

2. Cryogenic storage device according to claim 1, in which the sensor device (60) has at least one of the sensor types comprising:
- a sample carrier temperature sensor which is adapted to detect the temperature on the sample carrier device (10),
- a container temperature sensor which is adapted to detect the temperature in the cryogenic container (20),
- an intermediate storage temperature sensor (61) which is adapted to detect the temperature in the intermediate storage container (40),
- a coolant sensor which is adapted to detect a coolant consumption of the cooling device (30),
- a filling level sensor (64) in the cryogenic container (20),
- a throughflow sensor which is adapted to detect an operating state of a coolant valve of the cooling device (30),
- a camera device (66) which is adapted to record images in the intermediate storage container (40) and/or in the cryogenic container (20),
- a pressure sensor which is adapted to detect a negative pressure in an evacuated wall of the cryogenic container (20),
- a sample carrier test sensor which is adapted to detect an operating state of the sample carrier device (10), and
- a gas sensor for detecting a gas composition in the cryogenic container (20) and/or in the intermediate storage container (40), and/or
- a time measuring unit for detecting a duration during which the sample carrier device (10) is located in the intermediate storage container (40).

3. Cryogenic storage device according to one of the preceding claims,
comprising a lock device (80) which is adapted for introducing and/or removing samples into and from the intermediate storage container (40).

4. Cryogenic storage device according to one of the preceding claims, in which the intermediate storage container (40) comprises:
- a storage tower (42) which is arranged on an upper side of the cryogenic container (20), and
- an intermediate storage closure device (43) by means of which an interior (41) of the storage tower (42) can be closed.

5. Cryogenic storage device according to one of the preceding claims, in which the transport device (50) comprises
- a winch (51) which is arranged at an upper end of the storage tower (42),
- a robot arm, and/or
- an extendable rod.

6. Method for operating a cryogenic storage device (100), comprising a cryogenic container (20), which is cooled by a container cooling device (31), and an intermediate storage container (40), which is adapted for the intermediate storage of a sample carrier device (10) and has a transport device (50) by means of which the sample carrier device (10) can be moved between the cryogenic container (20) and the intermediate storage container (40), comprising the steps:
(a) cryogenically storing biological samples, which are arranged in the sample carrier device (10), in the cryogenic container (20), and
(b) detecting at least one operating parameter of the cryogenic storage device (100) by means of a sensor device (60), which is coupled with a control device (90), wherein
(c) the control device (90) together with the sensor device (60) and the transport device (50) forms a control loop, wherein upon detection of a predetermined operating state of the cryogenic storage device (100), comprising a malfunction state of the cryogenic storage device (100) or a refilling state during a refilling with liquid nitrogen into the cryogenic container (20),
- the transport device (50) is activated as a function of an output signal of the sensor device (60) and the sample carrier device (10) is moved from the cryogenic container (20) into the intermediate storage container (40), and
- an intermediate storage cooling device (32), which is adapted to cool the intermediate storage container (40), is activated as a function of the output signal of the sensor device (60).

7. Method according to claim 6, in which the detection of the at least one operating parameter of the cryogenic storage device (100) comprises:
- detecting the temperature on the sample carrier device (10) by means of a sample carrier temperature sensor,
- detecting the temperature in the cryogenic container (20) by means of a container temperature sensor,
- detecting the temperature in the intermediate storage container (20) by means of an intermediate storage temperature sensor (61),
- detecting a coolant consumption of the cooling device (30) by means of a coolant sensor,
- measuring the filling level in the cryogenic container (20) by means of a filling level sensor (64),
- detecting an operating state of a coolant valve of the cooling device (30) by means of a throughflow sensor,
- image recording in the intermediate storage container (40) and/or in the cryogenic container (20) by means of a camera device (66),
- detecting a negative pressure in an evacuated wall of the cryogenic container (20) by means of a pressure sensor,
- detecting an operating state of the sample carrier device (10) by means of a sample carrier test sensor,
- detecting a gas composition in the cryogenic container (20) and/or in the intermediate storage container (40) by means of a gas sensor, and/or
- detecting the duration during which the sample carrier device (10) is located in the intermediate storage container (40) by means of a time measuring unit.

8. Method according to one of the claims 6 to 7, comprising the step:
- closing an interior of the intermediate storage container (40) by means of an intermediate storage closure device (43) once a sample carrier device (10) has been moved from the cryogenic container (20) into the intermediate storage container (40).

9. Method according to one of the claims 6 to 8, comprising the step: moving the sample carrier device (10)
- by means of a winch (51) which is arranged at an upper end of the intermediate storage container (40),
- by means of a robot arm, or
- by means of an extendable rod.

10. Method according to one of the claims 6 to 9, comprising the step:
- moving the sample carrier device (10) into the intermediate storage container (40) while coolant is being supplied to the cryogenic container (20).

11. Method according to one of the claims 6 to 10, in which
- the sample carrier device (10) comprises a plurality of carrier parts (11), wherein
- upon detection of the predetermined operating state of the cryogenic storage device (100), all the carrier parts (11) are moved simultaneously into the intermediate storage container (40).

12. Method according to one of the claims 6 to 11, comprising the steps:
- transporting the sample carrier device (10) into the intermediate storage container (40),
- spatially separating the intermediate storage container (40) from the cryogenic container (20).

13. Method according to one of the claims 6 to 12, comprising the steps:
- detecting a predetermined operating state of the cryogenic storage device (100),
- cooling the intermediate storage container (40) by means of the intermediate storage cooling device (32) to a predetermined temperature depending on the detected operating state,
- transporting the sample carrier device (10) into the cooled intermediate storage container (40),
- detecting the duration of storage of the sample carrier device (10) in the intermediate storage container (40), and
- cooling the intermediate storage container to a predetermined second temperature and/or outputting an alarm signal if a maximum duration defined as a function of the predetermined temperature is exceeded.

## Revendications

1. Dispositif de stockage cryogénique (100), destiné notamment au stockage cryogénique d'échantillons biologiques, comprenant :
(a) un dispositif de support à échantillons (10), destiné à accueillir les échantillons,
(b) un récipient cryogénique (20), destiné à accueillir le dispositif de support à échantillons (10),
(c) un dispositif de refroidissement du récipient (30) permettant de refroidir le récipient cryogénique (20),
(d) un récipient de stockage provisoire (40), destiné à stocker provisoirement le dispositif de support à échantillons (10),
(e) un dispositif de transport (50) permettant de déplacer le dispositif de support à échantillons (10) entre le récipient cryogénique (20) et le récipient de stockage provisoire (40), et
(f) un dispositif de capteur (60) permettant de détecter au moins un paramètre de fonctionnement du dispositif de stockage cryogénique (100) et raccordé à un dispositif de commande (90),
(g) le dispositif de commande (90) formant un circuit de régulation avec le dispositif de capteur (60) et le dispositif de transport (50), le dispositif de commande (90) étant configuré de manière à activer le dispositif de transport (50) en fonction d'un signal de sortie du dispositif de capteur (60) lors de la détection d'un état de fonctionnement prédéterminé du dispositif de stockage cryogénique (100), comprenant un état de panne du dispositif de stockage cryogénique (100) ou un état de ravitaillement pendant un réapprovisionnement en azote liquide dans le récipient cryogénique (20), pour déplacer le dispositif de support à échantillons (10) du récipient cryogénique (20) au récipient de stockage provisoire (40), et le dispositif de stockage cryogénique (100) présentant un dispositif de refroidissement du stockage provisoire (32) permettant de refroidir le récipient de stockage provisoire (40), le dispositif de refroidissement du stockage provisoire (32) étant activé en fonction d'un signal de sortie du dispositif de capteur (60) lors de la détection d'un état de fonctionnement prédéterminé du dispositif de stockage cryogénique (100).

2. Dispositif de stockage cryogénique selon la revendication 1, dans lequel le dispositif de capteur (60) présente au moins un des types de capteurs comprenant :
- un capteur de température du support à échantillons, destiné à détecter la température sur le dispositif de support à échantillons (10),
- un capteur de température du récipient destiné à détecter la température dans le récipient cryogénique (20),
- un capteur de température du stockage provisoire (61) destiné à détecter la température dans le récipient de stockage provisoire (40),
- un capteur de fluide de refroidissement destiné à détecter une consommation en fluide de refroidissement du dispositif de refroidissement (30),
- un capteur de niveau de remplissage (64) dans le récipient cryogénique (20),
- un capteur de débit destiné à détecter l'état de fonctionnement d'une soupape à fluide de refroidissement du dispositif de refroidissement (30),
- un dispositif de caméra (66) destiné à la prise de vue dans le récipient de stockage provisoire (40) et/ou dans le récipient cryogénique (20),
- un capteur de pression qui est destiné à détecter une pression négative dans une paroi sous vide du récipient cryogénique (20),
- un capteur test du support à échantillons destiné à détecter un état de fonctionnement du dispositif de support à échantillons (10), et
- un capteur de gaz pour la détection d'une composition du gaz dans le récipient cryogénique (20) et/ou dans le récipient de stockage provisoire (40), et/ou
- un chronomètre pour déterminer une durée, pendant laquelle le dispositif de support à échantillons (10) se trouve dans le récipient de stockage provisoire (40).

3. Dispositif de stockage cryogénique selon l'une des revendications précédentes, qui présente un dispositif à écluses (80) destiné à introduire et/ou retirer des échantillons dans le récipient de stockage provisoire (40).

4. Dispositif de stockage cryogénique selon l'une des revendications précédentes, dans lequel le récipient de stockage provisoire (40) comprend :
- une tour de stockage (42) qui est disposée sur une face supérieure du récipient cryogénique (20), et
- un dispositif de fermeture du stockage provisoire (43) permettant de fermer un espace intérieur (41) de la tour de stockage (42).

5. Dispositif de stockage cryogénique selon l'une des revendications précédentes, dans lequel le dispositif de transport (50) comprend
- un treuil (51) disposé à une extrémité supérieure de la tour de stockage (42),
- un bras robotisé et/ou
- une tige télescopique.

6. Procédé pour faire fonctionner un dispositif de stockage cryogénique (100) comprenant un récipient cryogénique (20), qui est refroidi avec un dispositif de refroidissement du récipient (31), et un récipient de stockage provisoire (40) destiné à stocker provisoirement un dispositif de support à échantillons (10) et un dispositif de transport (50) permettant de déplacer le dispositif de support à échantillons (10) entre le récipient cryogénique (20) et le récipient de stockage provisoire (40), comprenant les étapes de :
(a) stockage cryogénique d'échantillons biologiques, disposés dans le dispositif de support à échantillons (10), dans le récipient cryogénique (20),
(b) détection d'au moins un paramètre de fonctionnement du dispositif de stockage cryogénique (100) avec un dispositif de capteur (60) qui est raccordé à un dispositif de commande (90),
(c) le dispositif de commande (90) formant un circuit de régulation avec le dispositif de capteur (60) et le dispositif de transport (50), où, lors de la détection d'un état de fonctionnement prédéterminé du dispositif de stockage cryogénique (100), comprenant un état de panne du dispositif de stockage cryogénique (100) ou un état de ravitaillement pendant un réapprovisionnement en azote liquide dans le récipient cryogénique (20),
- le dispositif de transport (50) est activé en fonction d'un signal de sortie du dispositif de capteur (60) et le dispositif de support à échantillons (10) est déplacé du récipient cryogénique (20) au récipient de stockage provisoire (40), et
- un dispositif de refroidissement du stockage provisoire (32), destiné à refroidir le récipient de stockage provisoire (40), est activé en fonction d'un signal de sortie du dispositif de capteur (60).

7. Procédé selon la revendication 6, dans lequel la détection d'au moins un paramètre de fonctionnement du dispositif de stockage cryogénique (100) comprend :
- la détection de la température sur le dispositif de support à échantillons (10) avec un capteur de température de support à échantillons,
- la détection de la température dans le récipient cryogénique (20) avec un capteur de température du récipient,
- la détection de la température dans le récipient de stockage provisoire (40) avec un capteur de température du stockage provisoire (61),
- la détection d'une consommation en fluide de refroidissement du dispositif de refroidissement (30) avec un capteur de fluide de refroidissement,
- la mesure d'un niveau de remplissage dans le récipient cryogénique (20) avec un capteur de niveau de remplissage (64),
- la détection d'un état de fonctionnement d'une soupape à fluide de refroidissement du dispositif de refroidissement (30) avec un capteur de débit,
- la prise de vue dans le récipient de stockage provisoire (40) et/ou dans le récipient cryogénique (20) avec un dispositif de caméra (66),
- la détection d'une pression négative dans une paroi sous vide du récipient cryogénique (20) avec un capteur de pression,
- la détection d'un état de fonctionnement du dispositif de support à échantillons (10) avec un capteur test du support à échantillons, et
- la détection d'une composition du gaz dans le récipient cryogénique (20) et/ou dans le récipient de stockage provisoire (40) avec un capteur de gaz, et/ou
- la détermination d'une durée, pendant laquelle le dispositif de support à échantillons (10) se trouve dans le récipient de stockage provisoire (40), avec un chronomètre.

8. Procédé selon l'une des revendications 6 à 7, comprenant les étapes de :
- fermeture d'un espace intérieur du récipient de stockage provisoire (40) avec un dispositif de fermeture du stockage provisoire (43), après qu'un dispositif de support à échantillons (10) a été déplacé du récipient cryogénique (20) au récipient de stockage provisoire (40).

9. Procédé selon l'une des revendications 6 à 8, comprenant les étapes de : déplacement du dispositif de support à échantillons (10)
- avec un treuil (51) disposé (51) à une extrémité supérieure du récipient de stockage provisoire (40),
- avec un bras robotisé ou
- avec une tige télescopique.

10. Procédé selon l'une des revendications 6 à 9, comprenant les étapes de :
- déplacement du dispositif de support à échantillons (10) dans le récipient de stockage provisoire (40) pendant une amenée de fluide de refroidissement dans le récipient cryogénique (20).

11. Procédé selon l'une des revendications 6 à 10, dans lequel
- le dispositif de support à échantillons (10) comprend plusieurs pièces de support (11), où
- lors de la détection de l'état de fonctionnement prédéterminé du dispositif de stockage cryogénique (100), toutes les pièces de support (11) sont déplacées en même temps dans le récipient de stockage provisoire (40) .

12. Procédé selon l'une des revendications 6 à 11, comprenant les étapes de :
- transport du dispositif de support à échantillons (10) dans le récipient de stockage provisoire (40),
- séparation spatiale du récipient de stockage provisoire (40) et du récipient cryogénique (20).

13. Procédé selon l'une des revendications 6 à 12, comprenant les étapes de :
- détection d'un état de fonctionnement prédéterminé du dispositif de stockage cryogénique (100),
- refroidissement du récipient de stockage provisoire (40) avec le dispositif de refroidissement du stockage provisoire (32) à une température prédéterminée en fonction de l'état de fonctionnement détecté,
- transport du dispositif de support à échantillons (10) dans le récipient de stockage provisoire (40) refroidi,
- détection de la durée de stockage du dispositif de support à échantillons (10) dans le récipient de stockage provisoire (40), et
- refroidissement du récipient de stockage provisoire à une deuxième température prédéterminée et/ou émission d'un signal d'alarme lors du dépassement d'une durée maximale prédéterminée en fonction de la température prédéterminée.
